# DEMANDE DE BREVET EUROPEEN

(11) **EP 3 964 895 A1**
(43) Date de publication de la demande: **09.03.2022**
(21) Numéro de dépôt: 20194714.0
(22) Date de dépôt: 04.09.2020
(51) Int. Cl.: G04B 3/04, G04B 37/22, G04B 37/06, A44C 27/00, B44C 5/00

(54) **PROCÉDÉ DE FABRICATION D'UNE PIÈCE EN MATÉRIAU DUR AVEC UN INSERT EN POLYMÈRE**

(71) Demandeur: Comadur S.A., 2400 Le Locle (CH)
(72) Inventeur: AREDE, Paulo, 2300 La Chaux-de-Fonds (CH); CARTIER, Damien, 25000 Besançon 7 (FR); BRUTILLOT, Alexandre, 25500 Morteau (FR); VUILLE, Pierry, 2338 Les Emibois (CH)
(74) Mandataire: ICB SA

(57) **Abrégé**

L'invention concerne un procédé de fabrication d'une pièce d'ornement, par exemple d'horlogerie, de bijouterie ou de téléphonie, notamment une couronne de montre, la pièce comprenant au moins en partie un matériau dur présentant une dureté Vickers supérieure à 1000 HV, caractérisé en ce que le procédé comprend les principales étapes suivantes :
- une étape de réalisation d'un précurseur à partir d'un mélange d'au moins un matériau en poudre avec un liant,
- une étape de réalisation d'un insert (11) en matériau polymère, l'insert (11) ayant au moins en partie une forme en négatif de celle souhaitée pour au moins une partie de la pièce,
- une étape de surmoulage du précurseur sur l'insert (11) en matériau polymère par injection dans un moule afin de former un corps vert (10), et une étape de frittage dudit corps vert (10) afin de former un corps de la future pièce dans ledit matériau dur.

## Description

### Domaine technique

L'invention se rapporte au domaine de la fabrication de pièces d'ornement, notamment en horlogerie, bijouterie ou téléphonie, la pièce étant en matériau dur. Elle concerne plus précisément un procédé de fabrication d'une pièce de montre, par exemple une couronne ou une carrure, avec un insert en matériau polymère.

### Arrière-plan technologique

Dans l'industrie horlogère ou en bijouterie, des matériaux variés sont utilisés pour la fabrication de boîtes ou de bracelets d'aspect divers. Il est en particulier connu de fabriquer des pièces d'horlogerie, notamment des boîtiers de montre ou des maillons de bracelet, en matériau dur. Par matériau dur, on entendra les matériaux présentant une dureté Vickers supérieure à 1000 HV. De tels matériaux durs sont par exemple de la céramique, du nitrure de silicium, de l'oxyde de zirconium, du saphir, ou de l'alumine.

En horlogerie, ils sont utilisés pour leurs propriétés mécaniques, en particulier parce qu'ils se rayent difficilement. Ils servent, par exemple, à fabriquer des pièces telles que des carrures de montre ou des chaînons de bracelet.

Les pièces d'ornement sont obtenues après une étape d'injection donnant la forme souhaitée à la pièce, puis par une étape de frittage pour durcir le matériau.

Cependant, ce type de procédé par injection ne permet pas d'obtenir des dimensions suffisamment précises. Par exemple, pour des maillons ou chainons de bracelets, on a besoin d'avoir des trous munis d'un taraudage pour pouvoir y visser une vis ou un élément muni d'un filetage. Une carrure de montre peut avoir besoin d'un trou muni d'un taraudage, par exemple pour y visser une couronne. Or, pour les carrures en matériau dur, seul l'enchâssement est possible pour une couronne. On a aussi besoin de percer des trous pour des poussoirs, qui ne peuvent être obtenus avec le procédé d'injection. En particulier, il est difficile de former des filetages ou des taraudages dans un matériau dur.

Pour y parvenir, il est nécessaire d'usiner la carrure pour former un taraudage. Or, les matériaux durs sont difficiles à usiner à cause de leur dureté. A cette fin, on utilise des outils en diamant à faible durée de vie, qui engendrent des coûts importants.

### Résumé de l'invention

Il serait avantageux d'obtenir une pièce en matériau dur, qui nécessite peu ou pas d'usinage sur le matériau dur, en particulier pour les matériaux céramiques, mais qui comprennent par exemple des surfaces fonctionnelles.

La présente invention propose ce type de procédé. Grâce à l'utilisation d'un matériau dur et d'un insert en matériau polymère, le procédé permet d'éviter l'usinage direct du matériau dur. Ainsi, on diminue le coût de fabrication de la pièce en évitant au maximum d'usiner le matériau dur. En outre, cela permet de créer des trous aux dimensions choisies, avec un taraudage si besoin.

Plus précisément, l'invention concerne un procédé de fabrication d'une pièce, par exemple d'horlogerie, de bijouterie ou de téléphonie, notamment une carrure de montre, la pièce comprenant au moins en partie un matériau dur présentant une dureté Vickers supérieure à 1000 HV.

Selon l'invention, le procédé comprend les principales étapes suivantes :
- une étape de réalisation d'un précurseur à partir d'un mélange d'au moins un matériau en poudre avec un liant,
- une étape de réalisation d'un insert en matériau polymère, l'insert ayant au moins en partie une forme en négatif de celle souhaitée pour au moins une partie de la pièce,
- une étape de surmoulage du précurseur sur l'insert en matériau polymère par injection dans un moule afin de former un corps vert, et
- une étape de frittage dudit corps vert afin de former un corps de la future pièce dans ledit matériau dur.

Selon un mode de réalisation particulier de l'invention, le procédé comprend une étape supplémentaire d'élimination de l'insert en polymère afin d'obtenir une pièce munie d'une partie ayant une forme prédéterminée, cette étape précédant l'étape de frittage.

Selon un mode de réalisation particulier de l'invention, le procédé comprend une étape supplémentaire d'assemblage de la pièce.

Selon un mode de réalisation particulier de l'invention, le procédé comprend une étape d'usinage du corps vert.

Selon un mode de réalisation particulier de l'invention, l'étape de surmoulage consiste à surmouler le corps vert sur un insert en partie inséré dans le corps vert afin d'y créer un trou.

Selon un mode de réalisation particulier de l'invention, l'étape de surmoulage consiste à surmouler le corps vert autour de l'insert afin d'y créer une cavité fermée.

Selon un mode de réalisation particulier de l'invention, l'insert comporte un filetage afin de créer un taraudage dans le corps vert.

Selon un mode de réalisation particulier de l'invention, le polymère est à choisir dans la liste suivante : le PVD (pour Polyvinyle Butyral plastifié), le CAB (pour Cellulose Acétate Butyrate plastifiée), la résine acrylique de type PBMA (pour Poly butyle méthacrylate).

Selon un mode de réalisation particulier de l'invention, le matériau dur est à choisir parmi les matériaux tels que le nitrure de silicium, l'oxyde de zirconium, l'alumine, les cermets, les métaux ou des composites de ces métaux.

L'invention concerne aussi une pièce d'ornement, par exemple d'horlogerie, de bijouterie ou de téléphonie, notamment une carrure de montre, comprenant un corps en matériau dur présentant une dureté Vickers supérieure à 1000 HV, la pièce étant munie d'une cavité fermée dans l'épaisseur du corps.

L'invention concerne encore une boîte de montre comprenant une telle pièce d'ornement, ainsi qu'une glace et une lunette pour maintenir la glace sur la pièce, et un fond pour fermer la boîte de montre.

### Brève description des figures :

L'invention sera mieux comprise en regard du dessin annexé dans lequel :
- la figure 1 est un schéma synoptique représentant le procédé selon l'invention,
- les figures 2a) à 2c) représentent des vues en coupe d'une pièce obtenue grâce au procédé selon l'invention après certaines étapes,
- les figures 3a) et 3b) représentent des vues en perspective d'une carrure de montre muni d'un trou taraudé obtenu grâce au procédé selon l'invention,
- la figure 4 représente une vue coupe d'une couronne montée sur une carrure de montre
- la figure 5 représente une vue en perspective d'un maillon de bracelet obtenu grâce au procédé selon l'invention,
- les figures 6a) et 6b) représentent un système permettant de mettre en œuvre le procédé selon l'invention, et
- les figures 7a) et 7b) représentent des vues en coupe d'une boîte de montre munie d'une cavité fermée obtenue grâce au procédé selon l'invention.

### Description détaillée de l'invention

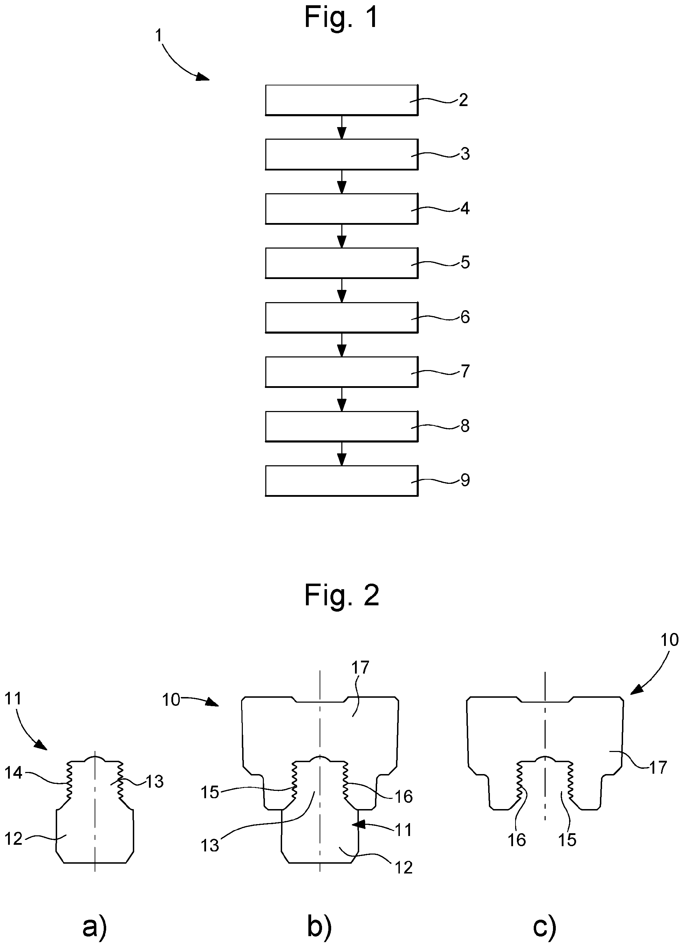

Le procédé de fabrication 1 d'une pièce d'ornement 10, par exemple d'horlogerie, de bijouterie ou de téléphonie, est représenté sur la figure 1. La pièce d'ornement est par exemple une carrure de boîte de montre, une lunette, un fond de boîte de montre, une pierre ou un poussoir de pièce d'horlogerie, une bague ou un bracelet de bijouterie, ou encore une coque de téléphone mobile. La pièce 10 comprend au moins en partie un matériau dur présentant une dureté Vickers supérieure à 1000 HV. Le matériau dur est, par exemple, un matériau céramique tel qu'un oxyde d'aluminium (Al2O3), un oxyde de zirconium (ZrO2), un carbure, un nitrure, un cermet, un métal dur ou tout autre matériau de dureté Vickers supérieure à 1000 HV.

Le procédé 1 comprend une première étape de réalisation 2 d'un précurseur à partir d'un mélange d'au moins un matériau en poudre avec un liant. Dans ce contexte, la poudre à base de céramique peut comporter au moins un oxyde métallique, un nitrure métallique ou un carbure métallique. A titre d'exemple, la poudre à base de céramique peut comporter de l'oxyde d'aluminium ou un mélange d'oxyde d'aluminium et d'oxyde de chrome afin de former du rubis synthétique, de l'oxyde de zirconium, qui peut être optionnellement pigmenté, de l'alumine, qui peut être optionnellement pigmenté, du nitrure de silicium, des cermets, des métaux et des composites de ces métaux. Les cermets sont par exemple du carbure de titane ou du carbure de tungstène. Les métaux sont par exemple du tungstène, du titane, de l'inox 316L ou de l'acier, de préférence sans nickel.
De plus, le liant est de type organique.

Le procédé 1 comprend une deuxième étape de réalisation 3 d'un insert en matériau polymère, l'insert ayant au moins en partie une forme en négatif de celle souhaitée pour au moins une partie de la pièce. L'insert comporte au moins une partie en forme négative de celle souhaitée pour une partie du corps en matériau dur final. Le polymère est par exemple choisi dans la liste suivante : PVD (pour Polyvinyle Butyral plastifié), le CAB (pour Cellulose Acétate Butyrate plastifiée), la résine acrylique de type PBMA (pour Poly butyle méthacrylate).

Une troisième étape 4 consiste à surmouler le précurseur sur l'insert en matériau polymère afin de former un corps vert. Le surmoulage est notamment effectué par injection dans un moule. Le moule a au moins en partie la forme de la pièce souhaitée compte tenu d'un coefficient de rétractation de la pièce. Le précurseur est injecté dans le moule par un tube, puis par des circuits de distribution du précurseur dans la totalité du moule. Le précurseur prend ainsi la forme du moule, par exemple une carrure de boîte de montre comme dans les exemples décrits dans la demande. En alternative, on peut aussi réaliser l'injection par nappe circulaire ou par canaux. Le corps vert prend la forme du moule et au moins n partie la forme de l'insert sur lequel il est surmoulé.

Dans une quatrième étape 5, on usine le corps vert pour éliminer des parties inutiles du corps vert produite par l'injection. On élimine par exemple une tubulure ou des canaux formés à cause de tube ou de circuits de distribution du système d'injection. Ainsi, on obtient un corps vert usiné.

Dans une cinquième étape 6, on élimine l'insert en polymère par déliantage thermique. De préférence, on plonge le corps vert surmoulé sur l'insert dans un bain d'alcool à 80°. Le bain d'alcool dissout l'insert en polymère, de sorte qu'on obtient le corps vert avec la forme souhaitée donnée par l'insert. Alternativement, on peut effectuer un déliantage thermique pour supprimer l'insert en polymère. Le corps surmoulé sur l'insert est ainsi chauffé à haute température pour faire disparaître le polymère. Le corps vert est par conséquent débarrassé de l'insert en polymère. L'insert laisse une forme en positif dans le corps vert, tel un trou taraudé.

La sixième étape 7 a pour fonction de fritter ledit corps vert usiné afin de former un corps de la future pièce dans ledit au moins un matériau dur. Le frittage consiste à chauffer le précurseur pour que les grains de poudres s'agglomèrent. Pendant le frittage, le corps vert durcit en se rétractant pour aboutir à un corps dur avec un coefficient de frittage. Préférentiellement selon l'invention, l'étape de frittage peut comporter une pyrolyse. Le corps de la pièce obtenu est substantiellement durci par cette étape. Ainsi, le corps de la pièce a une forme définitive.

Une septième étape 8 peut aussi être nécessaire pour procéder à un satinage et/ou un polissage du matériau dur. Ainsi, on améliore l'aspect esthétique de la carrure.

Enfin, dans une huitième étape 9, la pièce est assemblée à d'autres éléments, par exemple par vissage, grâce à la forme obtenue par le procédé. Par exemple, si la pièce est une carrure de montre d'horlogerie muni d'un trou taraudé, on assemble un bouton ou une couronne à la carrure.

Sur les figures 2a) à 2c), sont représentés un corps vert 10 et un insert 11 permettant d'aboutir à une couronne après certaines étapes du procédé. Après la deuxième étape de réalisation, on obtient un insert 11 ayant une forme préférentielle, tel que celui de la figure 2a). Dans cet exemple, l'insert 11 est un élément cylindrique muni d'un premier 12 et d'un deuxième 13 tronçon, le deuxième tronçon 13 étant destiné à donner une forme interne au corps vert 10. Le deuxième tronçon 13 est plus étroit que le premier 12 et comporte un filetage 14 sur sa périphérie. L'insert 11 permet de former un trou cylindrique 15 dans le corps vert 10, le trou 15 étant doté d'un taraudage 16 sur la paroi périphérique interne de la couronne. Ainsi, la pièce finie pourra être vissée lors de l'étape d'assemblage.

Sur la figure 2b), le précurseur est surmoulé sur l'insert 11, de sorte qu'on obtient un assemblage tel que représenté sur la figure 2b). Dans cet exemple, on a formé un corps vert 10 en forme de couronne de montre sur l'insert 11. La couronne est cylindrique et a une partie 17 plus épaisse à une extrémité. Le corps vert 10 est surmoulé sur le deuxième tronçon 13 de l'insert 11, de sorte que le deuxième tronçon 13 de l'insert 11 est enfoncé dans le corps vert 10. Ainsi, lorsque l'insert 11 est éliminé, un trou 15 est formé dans le corps vert 11 représenté sur la figure 2c). On remarque aussi que le filetage 14 de l'insert 11 a imprimé un taraudage 16 dans le trou 15 du corps vert 10. Après l'étape d'élimination de l'insert 11 en polymère et de frittage du corps vert 10, on obtient une couronne avec un trou taraudé. La couronne peut être vissée sur une tige d'un mouvement d'horlogerie à travers la carrure d'une montre.

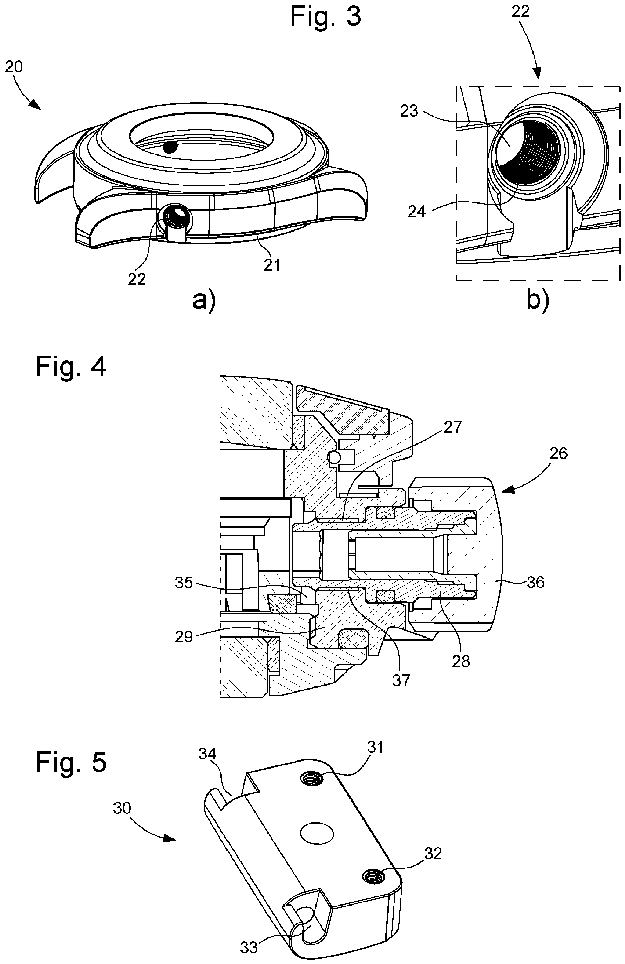

Les figure 3a) et 3b) montrent un autre exemple de pièce obtenue grâce à ce procédé. La pièce est une carrure 20 munie d'un trou taraudé 22, qui facilite l'assemblage d'un bouton par exemple, par vissage de ce dernier dans le trou. Le trou 22 est agencé sur la face périphérique 21 de la carrure. L'agrandissement du trou 22 sur la figure 3b) permet d'observer le taraudage à l'intérieur.

La figure 4 montre un autre exemple de pièce d'ornement obtenue avec le procédé selon l'invention. Une carrure 29 de montre comporte un trou 35 muni d'un taraudage 27 pour y visser un tube 28 de couronne 26. La couronne 26 comprend un tube 28 et une tête 36 de couronne 26 assemblées l'une à l'autre. Le tube 28 comprend un filetage 37 sur sa paroi périphérique coopérant avec le taraudage 27 du trou 35. La carrure 20 avec le trou taraudé 35 est obtenu grâce au procédé selon l'invention, en particulier le trou taraudé 35 est formé grâce à un insert en polymère.

Un autre exemple de pièce d'ornement réalisée grâce au procédé selon l'invention est maillon ou chaînon de bracelet 30, représenté sur la figure 5. Le maillon 30 est sensiblement plat et allongé. Le maillon comprend une ouverture traversante longitudinale 34 pour y loger un axe d'assemblage à une carrure de montre. Le maillon 30 comporte deux trous taraudés 31, 32, qui permettent le vissage du maillon 30 à un autre maillon. Les trous 31, 32 sont obtenus grâce à un insert en polymère. Le procédé permet en outre de réaliser des trous 31, 32 proches l'un de l'autre.

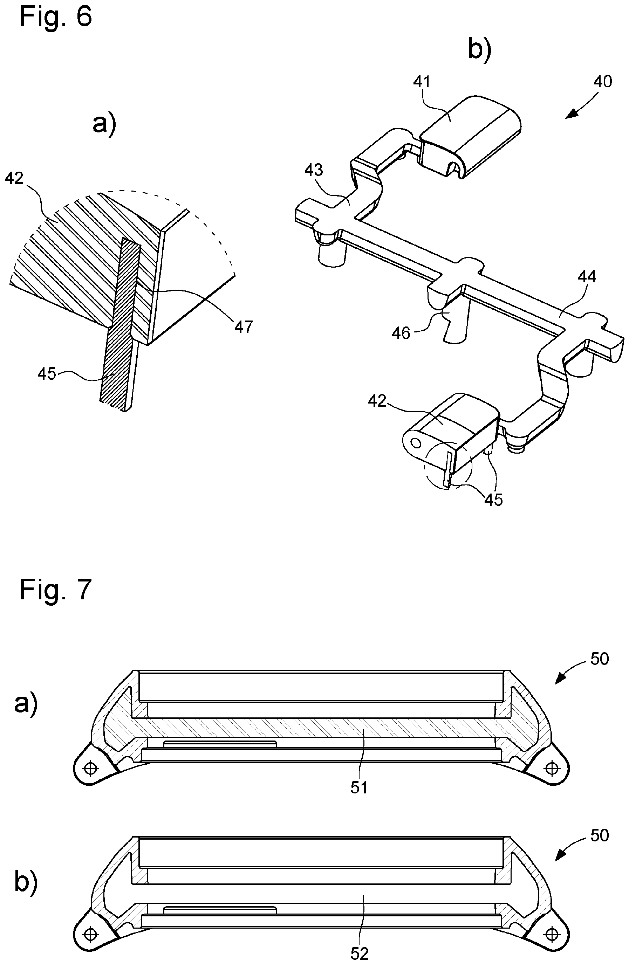

Un exemple de système 40 de mise en oeuvre de l'étape de surmoulage du maillon 30 est représenté sur les figures 6a) et 6b). Deux moules 41, 42 en forme de maillon sont représentés, chaque moule 41, 42 étant agencé à l'extrémité d'un conduit d'amenée 43, 44 du précurseur. Un conduit principal 46 permet d'injecter le précurseur, qui est distribué dans les deux conduit d'amenée 43, 44 jusqu'aux moules 41, 42. Les moules 41, 42 ont des ouvertures à travers lesquelles des inserts 45 peuvent être positionnés. Les inserts 45, en gros plan sur la figure 6a), ont une forme cylindrique, et sont munis au moins en partie d'un filetage 47 périphérique. La partie filetée est insérée dans le moule 41, 42 à travers une ouverture. Un seconde partie plus large que l'ouverture demeure à l'extérieur du moule 41, 42. Ainsi, lorsque le précurseur est injecté dans les moules 41, 42, le corps vert obtenu a la forme du maillon et est surmoulé sur les inserts 45 simultanément. Le maillon, avec le ou les inserts, est ensuite démoulé, pour passer aux étapes suivantes, notamment d'élimination des inserts 45.

Le procédé selon l'invention, permet en outre de surmouler un corps vert 50 autour d'un insert 51 afin d'y créer une cavité fermée 52. L'insert 51 est entièrement entouré du précurseur. L'insert en polymère est ensuite éliminé lors de l'étape d'élimination de la même manière que pour un insert en partie surmoulé. Un tel procédé permet par exemple de réaliser une carrure de montre allégée, la carrure étant en partie vide de matière. La figure 7a) montre un corps vert 50 en forme de carrure de montre, un insert 51 étant enveloppé dans la matière de la carrure. Lorsque l'insert 51 a disparu, un vide 52 apparaît dans l'épaisseur de matière formant la carrure, comme cela est représenté sur la figure 7b). Un tel procédé permet d'alléger la pièce, et d'économiser du matériau utilisé pour la fabriquer.

D'autre pièces sont réalisables grâce au procédé décrit ci-dessus. Ainsi, on peut par exemple fabriquer une lunette, un fond, une pierre ou un poussoir de pièce d'horlogerie, de même qu'une bague ou un bracelet de bijouterie, ou encore une coque de téléphone. Toutes ces pièces comportent un corps en matériau dur muni d'un trou ou d'une cavité.

## Revendications

1. Procédé de fabrication (1) d'une pièce d'ornement (20, 30), par exemple d'horlogerie, de bijouterie ou de téléphonie, notamment une couronne de montre, la pièce (20, 30) comprenant au moins en partie un matériau dur présentant une dureté Vickers supérieure à 1000 HV, **caractérisé en ce que** le procédé comprend les principales étapes suivantes :
- une étape de réalisation (2) d'un précurseur à partir d'un mélange d'au moins un matériau en poudre avec un liant,
- une étape de réalisation (3) d'un insert (11, 45, 51) en matériau polymère, l'insert (11, 45, 51) ayant au moins en partie une forme en négatif de celle souhaitée pour au moins une partie de la pièce,
- une étape de surmoulage (4) du précurseur sur l'insert (11, 45, 51) en matériau polymère par injection dans un moule (41, 42) afin de former un corps vert (10, 50), et
- une étape de frittage (7) dudit corps vert (10, 50), afin de former un corps dur de la future pièce (20, 30) dans ledit matériau dur.

2. Procédé selon la revendication 1, **caractérisé en ce qu'**il comprend une étape supplémentaire d'élimination (6) de l'insert (11, 45, 51) en polymère afin d'obtenir une pièce (20, 30) munie d'une partie ayant une forme prédéterminée, cette étape précédant l'étape de frittage (7).

3. Procédé selon la revendication 1 ou 2, **caractérisé en ce qu'**il comprend une étape supplémentaire d'assemblage (9) de la pièce (20, 30).

4. Procédé selon l'une, quelconque, des revendications précédentes, **caractérisé en ce qu'**il comprend une étape supplémentaire d'usinage (5) du corps vert (10, 50).

5. Procédé selon l'une, quelconque, des revendications précédentes, **caractérisé en ce que** l'étape de surmoulage (4) consiste à surmouler le corps vert (10, 50) sur un insert (11, 45) en partie inséré dans le corps vert (10), afin d'y créer un trou.

6. Procédé selon l'une, quelconque, des revendications précédentes, **caractérisé en ce que** l'étape de surmoulage (4) consiste à surmouler le corps vert (50) autour de l'insert (51) afin d'y créer une cavité fermée (52).

7. Procédé selon l'une, quelconque, des revendications précédentes, **caractérisé en ce que** l'insert (11, 45) comporte un filetage (14, 47) afin de créer un taraudage dans le corps vert.

8. Procédé selon l'une, quelconque, des revendications précédentes, **caractérisé en ce que** le polymère est à choisir dans la liste suivante : PVD (pour Polyvinyle Butyral plastifié), le CAB (pour Cellulose Acétate Butyrate plastifiée), la résine acrylique de type PBMA (pour Poly butyle méthacrylate).

9. Procédé selon l'une, quelconque, des revendications précédentes, **caractérisé en ce que** le matériau dur est à choisir parmi les matériaux tels que le nitrure de silicium, l'oxyde de zirconium, l'alumine, les cermets, les métaux ou des composites de ces métaux.

10. Pièce d'ornement, par exemple d'horlogerie, de bijouterie ou de téléphonie, notamment une carrure de montre, comprenant un corps en matériau dur présentant une dureté Vickers supérieure à 1000 HV, la pièce étant munie d'une cavité fermée dans l'épaisseur du corps.

11. Boîte de montre **caractérisée en ce qu'**elle comprend une pièce d'ornement selon la revendication 10, ainsi qu'une glace et une lunette pour maintenir la glace sur la pièce, et un fond pour fermer la boîte de montre.
